# EUROPÄISCHE PATENTSCHRIFT

(11) **EP 2 533 958 B1**
(45) Veröffentlichungstag und Bekanntmachung des Hinweises auf die Patenterteilung: **15.04.2020**
(21) Anmeldenummer: 11703831.5
(22) Anmeldetag: 07.02.2011
(51) Int. Cl.: B29B 9/16

(54) **VERFAHREN ZUR HERSTELLUNG VON GRANULATKÖRNERN VON POLYETHYLENTEREPHTHALAT**
METHOD FOR PRODUCING GRANULES FROM POLYETHYLENE TEREPHTHALATE
PROCÉDÉ DE PRÉPARATION DE GRANULES DE POLYÉTHYLÈNE TÉRÉPHTHALATE

(30) Priorität: 08.02.2010 DE 102010007163
(43) Veröffentlichungstag der Anmeldung: 19.12.2012
(73) Patentinhaber: Maag Automatik GmbH, 63762 Großostheim (DE)
(72) Erfinder: DEIß, Stefan, 55896 Harxheim (DE); GLÖCKNER, Frank, 63739 Aschaffenburg (DE); MÜLLER, Horst, 63840 Hausen (DE)
(74) Vertreter: Spranger, Stephan
(86) Internationale Anmeldenummer: PCT/EP2011/000566
(87) Internationale Veröffentlichungsnummer: WO 2011/095361

(56) Entgegenhaltungen:
- WO-A1-01/81450
- DE-A1- 10 349 016
- US-A1- 2005 110 182
- US-B1- 7 250 486
- US-B2- 7 192 545

## Beschreibung

Die Erfindung betrifft ein Verfahren zur Herstellung von Granulatkörnern von Polyethylenterephthalat (PET) gemäß dem Oberbegriff des Anspruches 1.

Polyethylenterephthalat (PET) findet heute in einer Vielzahl von Gebieten Anwendung, zum Beispiel bei der Herstellung von Folien oder Hohlkörpern wie etwa Flaschen für den Verpackungsbereich. Dabei sind besonders die Vielzahl von positiven Eigenschaften von Bedeutung, zum Beispiel die hohe Zähigkeit und hohe Temperaturfestigkeit kombiniert mit guter Elastizität.

Generell wird bei heute gängigen Verfahren und Vorrichtungen zur Herstellung von Polyethylenterephthalat (PET) eine Schmelze einer Polykondensation unterzogen. Eine derart hergestellte Schmelze wird dann zunächst beispielsweise mittels Stranggranulierung oder zum Beispiel auch mittels Unterwassergranulierung granuliert. Ein solches granuliertes PET-Material neigt jedoch bei Temperaturen von über 70 °C zum Verkleben. Um eine Störung durch Verkleben bei der weiteren Handhabung eines solchen granulierten PET-Materials zu vermeiden, müssen die Granulatkörner beispielsweise einer Kristallisation unterzogen werden. Die Bestimmung des Kristallisationsgrads erfolgt dabei z.B. durch relativ aufwändige Dichtemessungen der fertigen Granulatkörner nach der Herstellung.

Das US-Patent US 7,192,545 B2 betrifft ein Verfahren zur thermischen Kristallisation von Polyester-Polymer-Materialien als Granulatkörner in einem flüssigen Medium, wobei die Temperatur des flüssigen Mediums bei Eintritt des Materials über der Glasübergangstemperatur des entsprechenden Materials liegen soll bevor die Temperatur des Materials auf eine Temperatur unter seiner Glasübergangstemperatur fällt. Dabei kann eine Unterwassergranulationsvorrichtung zum Einsatz kommen. Der erreichte Kristallisationsgrad der so gewonnenen Granulatkörner wird im Nachhinein aufwändig über Schmelzepunktmessungen oder über Viskositätsmessungen bestimmt.

Die deutsche Offenlegungsschrift DE 198 48 245 A1 betrifft ein Verfahren zur Granulierung und Kristallisation von thermoplastischen Polyestern oder Copolyestern, z.B. auch von Polyethylenterephthalat (PET), beispielsweise durch Heißabschlagsgranulierung. Dabei soll bei Eintritt eines entsprechenden Vorprodukts in eine Flüssigkeit der Kristallisationsvorgang des Materials des Vorprodukts beschleunigt werden, wobei die Flüssigkeit dabei über 100 °C gehalten werden soll. Eine Bestimmung des erreichten Kristallisationsgrads erfolgt gemäß den dortigen Angaben im Nachhinein aufwändig über das Verfahren der dynamischen Differenz-Kalorimetrie.

Das US Patent US 7,250,486 B1 offenbart ein Verfahren gemäß dem Oberbegriff des Anspruchs 1 und beschreibt ein Verfahren und eine Vorrichtung zur Herstellung und Kristallisation von Granulatkörnern aus Polymermaterial. Dabei kann eine Überprüfung des Kristallisationsgrads durch optische Überprüfung einer Materialprobe erfolgen.

Das Dokument US 2005/110182 A1 beschreibt ein Verfahren und eine Vorrichtung zur Herstellung von kristallinen Granulatkörnern aus PET-Material, wobei die Trübung der Oberfläche zur Bestimmung der Kristallinität nach Ausschleusung der erzeugten Granulatkömer aus dem System erfolgt.

Das Dokument DE 103 49 016 A1 beschreibt ein Verfahren zur Herstellung von Kunststoffgranulat, beispielsweise aus PET-Material, wobei die entsprechenden Granulatkörner dabei mittels Unterwassergranulation hergestellt werden können und der Kristallisationseffekt der Farbänderung der Granulatkörner als anzeigbar beschrieben wird.

Der Erfindung liegt die Aufgabe zugrunde, die Nachteile des Standes der Technik zu überwinden und insbesondere ein Verfahren zur Herstellung von Granulatkörnern von Polyethylenterephthalat (PET) vorzusehen, welches einfach und kostengünstig und dabei dennoch reproduzierbar und kontrollierbar zuverlässig die Herstellung von einfach weiterverarbeitbaren Granulatkörnern von Polyethylenterephthalat (PET) ermöglicht.

Diese Aufgabe wird erfindungsgemäß mit einem Verfahren mit den Merkmalen gemäß Anspruch 1 gelöst.

Vorteilhafte Ausführungsformen der Erfindung sind in den jeweiligen Unteransprüchen definiert.

Das erfindungsgemäße Verfahren zur Herstellung von Granulatkörnern von Polyethylenterephthalat (PET) weist die Schritte auf:
- Erzeugen einer Schmelze von Polyethylenterephthalat (PET) mittels Polykondensation oder aus Recyclingmaterial.
- Erzeugen von Granulatkörnern aus der Schmelze mittels Unterwassergranulation, zum Beispiel mittels eines Unterwassergranulators, wie er von dem Unternehmen Automatik Plastics Machinery GmbH unter der Produktbezeichnung SPHERO• hergestellt und angeboten wird, wobei die Granulatkörner in ein Prozessfluid granuliert werden.
- Wegführen der Granulatkörner vom Ort der Unterwassergranulation in dem Prozessfluid,
- Kristallisieren der Granulatkörner in dem Prozessfluid,
- Ausschleusen der Granulatkörner in dem Prozessfluid, wobei bevorzugt eine Impellerschleuse vorgesehen werden kann und dabei bevorzugt ein eventueller Überdruck über Umgebungsdruck des Prozessfluids mit den darin enthaltenen Granulatkörnern abgebaut werden kann, und
- Trennen der Granulatkörner von dem Prozessfluid, wobei
im Kristallisationsschritt nur die Oberfläche der Granulatkörner so kristallisiert wird, dass das Innere der Granulatkörner amorph bleibt, wobei die Temperatur des Prozessfluids auf einen Wert eingestellt wird, bei welchem je nach Rezeptur des Polyethylenterephthalatmaterials die vorher experimentell bestimmte maximale Kristallisationsgeschwindigkeit des Polyethylenterephthalatmaterials der Granulatkörner erreicht wird, und wobei nach dem Kristallisationsschritt die Trübung der Oberfläche der Granulatkörner als Maß für den erreichten Kristallisationsgrad und für die erreichte Kristallisationstiefe an der Oberfläche der Granulatkörner bestimmt wird. Gegebenenfalls kann bevorzugt noch ein zusätzlicher Nachkühlschritt zum Nachkühlen der Granulatkörner in einem Nachkühlfluid, wie etwa Wasser mit einer Temperatur von z.B. 40 °C, vorgesehen sein, besonders bevorzugt nach dem Ausschleusen der Granulatkörner mit dem Prozessfluid, wobei dabei besonders bevorzugt das Prozessfluid selbst als Nachkühlfluid dienen kann.

Gemäß der Erfindung wird also zunächst bei maximaler Kristallisationsgeschwindigkeit zumindest nur die Oberfläche der erzeugten Granulatkörner so kristallisiert, dass das Innere der Granulatkörner amorph bleibt und zusätzlich wird anschließend online, d.h. unmittelbar als Teil des erfindungsgemäßen Verfahrens direkt, bevorzugt z.B. direkt nach der Kristallisation, im Materialfluss des Verfahrens die Trübung der Oberfläche der so erzeugten Granulatkörner als Maß für den erreichten Kristallisationsgrad, d. h. die Stärke der Kristallisation im kristallisierten Bereich, und für die erreichte Kristallisationstiefe, d. h. die räumliche Ausdehnung der Kristallisation an der Oberfläche der Granulatkörner, bestimmt. Die Bestimmung der Trübung der Oberfläche der Granulatkörner kann dabei erfindungsgemäß bevorzugt erfolgen, wenn die Granulatkörner sich noch im Prozessfluid befinden. Bevorzugt kann die Bestimmung der Trübung der Granulatkörner erfindungsgemäß auch erfolgen, nachdem die Granulatkörner von dem Prozessfluid getrennt sind. Die Bestimmung der Trübung der Oberfläche der Granulatkörner kann bevorzugt unmittelbar am Ort der Kristallisierung der Granulatkörner erfolgen. Gegenüber dem Stand der Technik ist es nicht nötig, die Granulatkörner zunächst zu trocknen (was allerdings erfindungsgemäß auch gemacht werden kann) und es ist erfindungsgemäß nicht nötig, die Granulatkörner offline in zusätzlichen aufwändigen, laborgestützten Messverfahren hinsichtlich ihrer Kristallisation erst im Nachhinein nach dem Durchlaufen des Herstellungsverfahrens zu untersuchen.

Durch das erfindungsgemäße Verfahren können Granulatkörner aus Polyethylenterephthalat (PET) auf besonders einfache und kostengünstige Art und Weise hergestellt werden, wobei das erfindungsgemäße Verfahren dabei auch reproduzierbar und kontrollierbar zuverlässig einfach weiter verarbeitbare Granulatkörner aus dem Polyethylenterephthalat (PET)-Material erzeugt, welche bis zu ihrer Verwendung nicht zusammenkleben.

Besonders einfach und rasch kann eine Bestimmung der Trübung der Oberfläche der Granulatkörner gemäß der Erfindung erfolgen, wenn diese Trübung der Oberfläche der Granulatkörner optisch über Lichtbrechung bestimmt wird. Dabei wird Licht, wie beispielsweise Laserlicht, auf die Granulatkörner gerichtet, und aus der gemessenen Ablenkung des Lichts bzw. der Reduzierung der Intensität des Lichts kann auf die Trübung und somit auf die erfolgte Kristallisation an der Oberfläche der Granulatkörner erfindungsgemäß bevorzugt geschlossen werden.

Besonders effizient ist eine Ausführungsform des erfindungsgemäßen Verfahrens, bei welcher bei Änderung des Grads der Trübung der Oberfläche der Granulatkörner, bevorzugt bestimmt im Schritt der Bestimmung der Trübung der Oberfläche der Granulatkörner, insbesondere bevorzugt optisch durch Lichtbrechung, dann entsprechend, bevorzugt unmittelbar, im (vorangehenden) Kristallisationsschritt die Temperatur des Prozessfluids und/oder die Zeitdauer des Kristallisationsschritts geändert wird/werden. Durch Beeinflussung des Parameters der Temperatur des Prozessfluids und somit der auf die Granulatkörner beim Kristallisationsschritt einwirkenden Temperatur, und/oder durch die Veränderung der Zeitdauer, in welcher die Granulatkörner beim Kristallisationsschritt dem Prozessfluid der bestimmten Temperatur ausgesetzt sind, kann effizient und rasch die optimale Kristallinität nur der Oberfläche der Granulatkörner besonders einfach und rasch erfindungsgemäß bevorzugt erreicht werden.

Zweckmäßig hat sich in bisherigen Versuchen beim Kristallisationsschritt die Temperatur des Prozessfluids als geeignet erwiesen, wenn diese Temperatur im Bereich von 180 °C ± 10 °C liegt. In dem angegebenen Temperaturbereich liegt bei den bisher untersuchten Rezepturen von Polyethylenterephthalatmaterialien die vorher experimentell bestimmte maximale Kristallisationsgeschwindigkeit des Polyethylenterephthalatmaterials.

Bevorzugt wurde gefunden, dass beim erfindungsgemäßen Verfahren die Verweildauer der Granulatkörner im Prozessfluid beim Kristallisationsschritt bevorzugt im Bereich von 0,5 Minuten bis 10 Minuten liegen sollte, besonders bevorzugt im Bereich von 1 Minute bis 5 Minuten.

Um eine ausreichende Oberflächenkristallisation der erzeugten Granulatkörner zu erreichen und gleichzeitig sicherzustellen, dass das Innere der Granulatkörner, wie erfindungsgemäß vorgesehen, amorph verbleibt, soll der Kristallisationsschritt so durchgeführt werden, dass die Kristallisationstiefe an der Oberfläche der Granulatkörner bevorzugt nur bis zu 10 % des Radius der Granulatkörner beträgt.

Bevorzugt kann bei dem erfindungsgemäßen Verfahren das Prozessfluid bei der Unterwassergranulation, dem Wegführen der Granulatkörner und dem Kristallisationsschritt unter einem erhöhten Druck über Umgebungsdruck stehen, wobei der Druck bevorzugt gleich oder größer 1 bar ist, bevorzugter gleich oder größer 3 bar ist, noch bevorzugter gleich oder größer 4 bar ist und besonders bevorzugt gleich oder größer 10 bar ist. Bei der Verwendung von beispielsweise Wasser als Prozessfluid sollte der Druck gleich oder größer 10 bar sein, da bei diesem Druckbereich das Wasser als Prozessfluid die bevorzugte Temperatur von 180 °C ± 10 °C aufweisen kann, ohne in die dampfförmige Phase überzugehen.

Um die Weiterverarbeitbarkeit der erfindungsgemäß erzeugten Granulatkörner weiter verbessern zu können, müssen die Granulatkörner nach dem Kristallisationsschritt bis zu ihrer Verwendung auf einer Temperatur unterhalb der Temperatur der maximalen Kristallisationsgeschwindigkeit gehalten werden. Dies betrifft insbesondere weitere folgende Bearbeitungsschritte, in welchen die Granulatkörner beispielsweise noch einer Nachkondensation (SSP) unterzogen werden können. Erst im Fall der Weiterverarbeitung der erfindungsgemäß erzeugten Granulatkörner beispielsweise bei der Herstellung von Kunststoffflaschen, wobei die erfindungsgemäß hergestellten Granulatkörner Verwendung finden können, kann die dortige Prozesstemperatur dann über der erfindungsgemäß eingestellten Temperatur der maximalen Kristallisationsgeschwindigkeit beim erfindungsgemäßen Kristallisationsschritt eingestellt werden, da dann bei der späteren Verwendung ein Aufschmelzen der Granulatkörner wieder gewünscht wird.

Bevorzugt wird das Prozessfluid ein Fluid sein, ausgewählt aus der nicht abgeschlossenen Gruppe Wasser, Umgebungsluft oder Stickstoff.

Die Erfindung wird anhand des Beispiels näher erläutert, wobei die folgend beschriebenen Untersuchungen durch die Anmelderin durchgeführt wurden.

Ein Polyethylenterephthalat (PET)-Material mit einer intrinsischen Viskosität von 0,75 dl/g wurde bei einem Durchsatz von 35 kg pro Stunde je Düsenbohrung durch eine Lochplatte eines Unterwassergranulators des Typs SPHERO® des Unternehmens Automatik Plastics Machinery GmbH in Wasser als Prozessfluid extrudiert und unmittelbar am Austritt aus den Düsenbohrungen von einer Schneidmesserapparatur zu Granulatkörnern geschnitten. Die in das Wasser granulierten Granulatkörner wurden vom Ort der Unterwassergranulation im Wasser weggeführt. Versuchsweise wurde die Temperatur des Wassers im dann erfolgenden Kristallisationsschritt in drei Stufen variiert, wobei der Wasserdruck entsprechend der jeweiligen Wassertemperatur so eingestellt wurde, dass es nicht zum Verdampfen des Wassers kam. Nach jeweils konstanter Verweilzeit gemäß dem erfindungsgemäßen Kristallisationsschritt wurden die Granulatkörner anschließend über eine Impeller-Schleuse aus dem Bereich der Unterwassergranulation ausgeschleust und vom Wasser abgetrennt und danach in einem zusätzlichen Wasserbad von 40 °C weiter abgekühlt sowie danach einem Trocknungsschritt unterzogen. Daraufhin wurden Proben der Granulatkörner der Bestimmung des Trübungsgrads erfindungsgemäß unterzogen. Anhand weiterer mikroskopischer Untersuchung von Dünnschnitten der jeweils erhaltenen Granulatkörner wurde dann eine Korrelation des bestimmten Trübungsgrads zur Dicke der kristallinen Randschicht der jeweiligen Granulatkörner hergestellt.

Die dabei beispielhaft durchgeführten Untersuchungen ergaben folgende Ergebnisse:
Für alle Proben:
- Durchschnittlicher Durchmesser der erzeugten Granulatkörner: 2,7 mm
- jeweilige Verweilzeit der Granulatkörner im Prozessfluid (Wasser) beim Kristallisationsschritt: 75 Sekunden

**Tabelle 1:**

| | Probe a | Probe b | Probe c |
|---|---|---|---|
| Prozessfluid- (Wasser) - temperatur | 160 °C | 170 °C | 180 °C |
| Trübungsgrad, bestimmt durch Vergleich mit Formazin-Standard entsprechend DIN EN 27027 | 27 NTU | 29 NTU | 32 NTU |
| Dicke der kristallisierten Randschicht | 11 µm | 11 µm | 13 µm |
| Granulatkörnerbeurteilung bezüglich Oberflächenbeschaffenheit | Oberfläche tolerierbar kaum klebrig | Oberfläche nicht klebrig | Oberfläche nicht klebrig |

Die so erzeugten Granulatkörner können beispielsweise zur Weiterverarbeitung in der PET-Flaschenherstellung verwendet werden.

## Patentansprüche

1. Verfahren zur Herstellung von Granulatkörnern von Polyethylenterephthalat, durch
- Erzeugen einer Schmelze von Polyethylenterephthalatmaterial,
- Erzeugen von Granulatkörnern aus der Schmelze mittels Unterwassergranulation in ein Prozessfluid,
- Wegführen der Granulatkörner vom Ort der Unterwassergranulation in dem Prozessfluid,
- Kristallisieren der Granulatkörner in dem Prozessfluid,
- Ausschleusen der Granulatkörner in dem Prozessfluid,
- Trennen der Granulatkörner von dem Prozessfluid,
wobei im Kristallisationsschritt nur die Oberfläche der Granulatkörner so kristallisiert wird, dass das Innere der Granulatkörner amorph bleibt, wobei die Temperatur des Prozessfluids auf einen Wert eingestellt wird, bei welchem je nach Rezeptur des Polyethylenterephthalatmaterials die vorher experimentell bestimmte maximale Kristallisationsgeschwindigkeit des Polyethylenterephthalatmaterials der Granulatkörner erreicht wird, **dadurch gekennzeichnet, dass** nach dem Kristallisationsschritt online unmittelbar als Teil des erfindungsgemäßen Verfahrens direkt im Materialfluss des Verfahrens die Trübung der Oberfläche der so erzeugten Granulatkörner als Maß für den erreichten Kristallisationsgrad und für die erreichte Kristallisationstiefe an der Oberfläche der Granulatkörner bestimmt wird.

2. Verfahren nach Anspruch 1, **dadurch gekennzeichnet, dass** die Trübung der Oberfläche der Granulatkörner optisch über Lichtbrechung bestimmt wird.

3. Verfahren nach Anspruch 1 oder 2, **dadurch gekennzeichnet, dass** bei Änderung des Grads der Trübung der Oberfläche der Granulatkörner entsprechend im Kristallisationsschritt die Temperatur des Prozessfluids und/oder die Zeitdauer des Kristallisationsschritts geändert wird/werden.

4. Verfahren nach einem der Ansprüche 1 bis 3, **dadurch gekennzeichnet, dass** beim Kristallisationsschritt die Temperatur des Prozessfluids im Bereich von 180 °C ± 10 °C liegt.

5. Verfahren nach einem der Ansprüche 1 bis 4, **dadurch gekennzeichnet, dass** beim Kristallisationsschritt die Verweildauer der Granulatkörner im Prozessfluid im Bereich von 0,5 min. bis 10 min. beträgt, bevorzugt im Bereich von 1 min. bis 5 min. beträgt.

6. Verfahren nach einem der Ansprüche 1 bis 5, **dadurch gekennzeichnet, dass** der Kristallisationsschritt so durchgeführt wird, dass die Kristallisationstiefe an der Oberfläche der Granulatkörner bis zu 10 % des Radius der Granulatkörner beträgt.

7. Verfahren nach einem der Ansprüche 1 bis 6, **dadurch gekennzeichnet, dass** das Prozessfluid bei der Unterwassergranulation, dem Wegführen der Granulatkörner und dem Kristallisationsschritt unter einem erhöhten Druck über Umgebungsdruck steht, wobei der Druck bevorzugt gleich oder größer 1 bar ist, bevorzugter gleich oder größer 3 bar ist, noch bevorzugter gleich oder größer 4 bar ist, und besonders bevorzugt gleich oder größer 10 bar ist.

8. Verfahren nach einem der Ansprüche 1 bis 7, **dadurch gekennzeichnet, dass** nach dem Kristallisationsschritt die Granulatkörner bis zu Ihrer Verwendung auf einer Temperatur unterhalb der Temperatur der maximalen Kristallisationsgeschwindigkeit gehalten werden.

9. Verfahren nach einem der Ansprüche 1 bis 8, **dadurch gekennzeichnet, dass** das Prozessfluid ein Fluid ist, ausgewählt aus der nicht abgeschlossenen Gruppe Wasser, Umgebungsluft oder Stickstoff.

## Claims

1. Method for producing polyethylene terephthalate granules, comprising the steps of:
- producing a melt of polyethylene terephthalate material;
- producing granules from the melt by means of underwater granulation into a process fluid;
- removing the granules from the location of the underwater granulation in the process fluid;
- crystallising the granules in the process fluid;
- extracting the granules in the process fluid;
- separating the granules from the process fluid;
with only the surface of the granules being crystallised in the crystallisation step such that the inside of the granules remains amorphous, the temperature of the process fluid being set to a value at which, depending on the formulation of the polyethylene terephthalate material, the previously experimentally determined maximum crystallisation rate of the polyethylene terephthalate material of the granules is achieved, **characterised in that**, after the crystallisation step, the opacity of the surface of the granules produced in this way is determined online, directly as part of the method according to the invention and directly in the material flow of the method, as a measure of the degree of crystallisation achieved and of the depth of crystallisation achieved at the surface of the granules.

2. Method according to claim 1, **characterised in that** the opacity of the surface of the granules is determined optically by means of light refraction.

3. Method according to either claim 1 or claim 2, **characterised in that**, when the degree of opacity of the surface of the granules changes, the temperature of the process fluid and/or the duration of the crystallisation step is/are changed accordingly in the crystallisation step.

4. Method according to any of claims 1 to 3, **characterised in that**, in the crystallisation step, the temperature of the process fluid is in the range of 180°C ± 10°C.

5. Method according to any of claims 1 to 4, **characterised in that**, in the crystallisation step, the residence time of the granules in the process fluid is in the range of from 0.5 min. to 10 min., preferably in the range of from 1 min. to 5 min.

6. Method according to any of claims 1 to 5, **characterised in that** the crystallisation step is carried out such that the depth of crystallisation at the surface of the granules is up to 10% of the radius of the granules.

7. Method according to any of claims 1 to 6, **characterised in that**, during the underwater granulation, the removal of the granules and the crystallisation step, the process fluid is under an elevated pressure which is above ambient pressure, the pressure in particular being greater than or equal to 1 bar, preferably greater than or equal to 3 bar, more preferably greater than or equal to 4 bar, and particularly preferably greater than or equal to 10 bar.

8. Method according to any of claims 1 to 7, **characterised in that**, after the crystallisation step, the granules are kept at a temperature below the temperature of the maximum crystallisation rate until they are used.

9. Method according to any of claims 1 to 8, **characterised in that** the process fluid is a fluid selected from the incomplete group of water, ambient air or nitrogen.

## Revendications

1. Procédé de fabrication de granules de polyéthylène téréphtalate, par
- production d'une masse en fusion de matière de polyéthylène téréphtalate ;
- production de granules à partir de la masse en fusion au moyen d'une granulation sous eau dans un fluide de processus,
- évacuation des granules du lieu de la granulation sous eau dans le fluide de processus,
- cristallisation des granules dans le fluide de processus,
- éclusage des granules dans le fluide de processus,
- séparation des granules du fluide de processus,
dans lequel dans l'étape de cristallisation, seule la surface des granules est cristallisée de sorte que l'intérieur des granules reste amorphe, dans lequel la température du fluide de processus est réglée à une valeur à laquelle, en fonction de la formulation de la matière de polyéthylène téréphtalate, la vitesse de cristallisation maximum déterminée expérimentalement auparavant de la matière de polyéthylène téréphtalate des granules est atteinte, **caractérisé en ce qu'**après l'étape de cristallisation en ligne immédiatement en tant que partie du procédé selon l'invention directement dans le flux de matière du procédé, le trouble de la surface des granules ainsi produits est déterminé en tant que mesure du degré de cristallisation atteint et de la profondeur de cristallisation atteinte à la surface des granules.

2. Procédé selon la revendication 1, **caractérisé en ce que** le trouble de la surface des granules est déterminé optiquement par le biais de la réfraction de la lumière.

3. Procédé selon la revendication 1 ou 2, **caractérisé en ce qu'**en cas de modification du degré du trouble de la surface des granules de manière correspondante dans l'étape de cristallisation la température du fluide de processus et/ou la durée de l'étape de cristallisation est/sont modifiée(s).

4. Procédé selon l'une quelconque des revendications 1 à 3, **caractérisé en ce que** dans l'étape de cristallisation, la température du fluide de processus se situe dans la plage de 180 °C ± 10 °C.

5. Procédé selon l'une quelconque des revendications 1 à 4, **caractérisé en ce que** dans l'étape de cristallisation, la durée de séjour des granules dans le fluide de processus se situe dans la plage de 0,5 min à 10 min, de préférence dans la plage de 1 min à 5 min.

6. Procédé selon l'une quelconque des revendications 1 à 5, **caractérisé en ce que** l'étape de cristallisation est réalisée de sorte que la profondeur de cristallisation à la surface des granules va jusqu'à 10 % du rayon des granules.

7. Procédé selon l'une quelconque des revendications 1 à 6, **caractérisé en ce que** le fluide de processus lors de la granulation sous eau, de l'évacuation des granules et de l'étape de cristallisation est sous une pression accrue supérieure à la pression ambiante, dans lequel la pression est de préférence égale ou supérieure à 1 bar, plus préférentiellement égale ou supérieure à 3 bar, encore plus préférentiellement égale ou supérieure à 4 bar, et le plus préférentiellement égale ou supérieure à 10 bar.

8. Procédé selon l'une quelconque des revendications 1 à 7, **caractérisé en ce qu'**après l'étape de cristallisation les granules sont maintenus jusqu'à leur utilisation à une température inférieure à la température de la vitesse de cristallisation maximum.

9. Procédé selon l'une quelconque des revendications 1 à 8, **caractérisé en ce que** le fluide de processus est un fluide, sélectionné dans le groupe non fermé eau, air ambiant ou azote.
